# EUROPÄISCHE PATENTSCHRIFT

(11) **EP 1 759 958 B1**
(45) Veröffentlichungstag und Bekanntmachung des Hinweises auf die Patenterteilung: **14.01.2009**
(21) Anmeldenummer: 06014779.0
(22) Anmeldetag: 15.07.2006
(51) Int. Cl.: B62D 21/15, F16F 7/12

(54) **Crashrelevantes Bauteil einer Fahrzeugstruktur oder eines Fahrwerks eines Kraftfahrzeugs**
Impact absorbing component for a vehicle structure or for the chassis of a motor vehicle
Composant absorbant les impacts pour une structure de véhicule ou pour un châssis de véhicule automobile

(30) Priorität: 29.08.2005 DE 102005041021
(43) Veröffentlichungstag der Anmeldung: 07.03.2007
(73) Patentinhaber: Benteler Automobiltechnik GmbH, 33104 Paderborn (DE)
(72) Erfinder: Groß, Walter, 32456 Detmold (DE); Stolle, Jens, 33758 Holte Stukenbrock (DE); Neumann, Hans-Jürgen Dr., 33699 Bielefeld (DE); Streubel, Wolfgang, 32756 Detmold (DE)
(74) Vertreter: Griepenstroh, Jörg

(56) Entgegenhaltungen:
- EP-A- 1 541 424
- DE-A1- 10 331 862
- DE-A1- 19 625 295
- FR-A1- 2 785 965
- US-B1- 6 328 377

## Beschreibung

Die Erfindung betrifft ein crashrelevantes Bauteil einer Fahrzeugstruktur oder eines Fahrwerks eines Kraftfahrzeugs mit den Merkmalen im Oberbegriff des Patentanspruchs 1.

Im Vorder- oder Hintenivagenbereich eines Kraftfahrzeugs kommen insbesondere im Zusammenhang mit crashrelevanten Strukturbau- und Fahrwerksteilen kompliziert gestaltete Metallgussteile zum Einsatz. Die Verwendung von Gussbauteilen aus Aluminium, Aluminiumlegierungen oder anderen geeigneten Gusswerkstoffen ermöglichen hohe Gewichtseinsparungen bei gleichzeitiger Realisierung komplexer Strukturen.

Aufgrund der im Vorderwagenbereich geforderten Anprallnachgiebigkeit war es bislang erforderlich, die relativ dickwandigen und unnachgiebigen Gussbauteile mit dünnwandigen Deformationsbauteilen zu koppeln, beispielsweise durch Einschweißen eines Strangpressprofils. Der Herstellungsaufwand zur Verbindung von Gussbauteilen mit zwischengeschaltetem Deformationsbauteil ist erheblich, heblich, da mehrere Einzelteile gesondert gefertigt, gehändelt, positioniert und miteinander verschweißt werden müssen. Infolge des Verzugs durch Schweißwärme lassen sich zahlreiche Funktionsflächen und Bohrungen erst nach dem Zusammenbau auf zulässige Toleranzen bearbeiten. Auch nach der mechanischen Bearbeitung ist ein derart konstruiertes Bauteil verzugsanfällig und erfordert einen speziellen Transportschutz.

Aus der EP 1 541 424 A1 ist ein Crashelement, insbesondere für ein Kraftfahrzeug in Form eines Hohlprofils bekannt, welches zumindest einen umlaufenden Bereich aufweist, in welchem die Hohlprofilwandung einen, im Wesentlichen springenden muffen/treppenartigen Versatz aufweist und wobei der Versatz als Sollbruchstelle ausgebildet ist, welche in einem Crashfall bei einer vorbestimmten Crashkraft aufbricht. Die dabei im Crashfall entstehenden Hohlprofilteile sind im Bereich des Versatzes Energieabsorbierend und teleskopartig ineinander einschiebbar. Dieses Crashelement wird durch Innenhochdruckumformung eines Hohlprofilrohlings erzeugt.

Hiervon ausgehend liegt der Erfindung die Aufgabe zugrunde, ein crashrelevantes Bauteil einer Fahrzeugstruktur oder eines Fahrwerks eines Kraftfahrzeugs aufzuzeigen, welches kostengünstig herstellbar ist und gleichzeitig die erforderlichen Crasheigenschaften erfüllt.

Diese Aufgabe ist bei einem Strukturbauteil mit den Merkmalen des Patentanspruchs 1 gelöst.

Vorteilhafte Weiterbildungen des Erfndungsgedankens sind Gegenstand der Unteransprüche.

Ein ganz wesentliches Merkmal des erfindungsgemäßen Strukturbauteils ist, dass das Deformationselement nicht zwischen die Metallgussbauteile geschweißt werden muss, sondern einstückig, also monolithisch mit diesen in einem Gießverfahren hergestellt wird. Dadurch wird die Anzahl der Bauteile erheblich reduziert. Es entfällt eine aufwendige separate Fertigung, Positionierung und selbstverständlich der bislang erforderliche Verbindungsvorgang, das heißt das Schweißen. Mit dem Wegfall der Schweißwärme tritt folglich auch weniger Verzug im Strukturbauteil auf.

Entscheidend ist, dass das Deformationsbauteil in der Lage ist, die erforderten Crasheigenschaften zu erfüllen. Dies wird dadurch erreicht, dass mehrere in Reihe angeordnete trichterförmige Keilkörper vorgesehen sind, die über Sollbruchstege mit den jeweils benachbarten Keilkörpern verbunden sind. Die Keilkörper sind in ihren Durchmessern derart aufeinander abgestimmt, dass sie bei Erreichen einer Grenzbelastung unter Zerstörung der Sollbruchstege teleskopartig begrenzt ineinanderschiebbar sind. Dadurch verklemmen die ineinander geschobenen Keilkörper selbsthemmend, so dass nach dem Bruch eines Sollbruchstegs das erste Metallgussbauteil mit hinreichender Sicherheit mit dem zweiten Metallgussbauteil verbunden ist. Die trichterförmige Gestaltung der Keilkörper ermöglicht eine Selbstzentrierung der aneinander anliegenden Keilkörper, so dass die Metallgussbauteile trotz Veränderung ihrer Relativlage auch bei einem Crash eine vorgegebene Position einnehmen. Die Selbsthemmung der miteinander verklemmten Keilkörper verhindert ein unbeabsichtigtes Lösen der Metallgussbauteile voneinander. Mit der Erfindung gelingt es, ein vollkommen in Gusstechnik hergestelltes Strukturbauteil oder Fahrwerkteil bereitzustellen, das einerseits gewichtsoptimiert und anforderungsgerecht konstruiert ist, des Weiteren aber die Fähigkeit besitzt, Crashenergie in Verformungs-energie umzuwandeln.

Die Selbsthemmung kann insbesondere dadurch verbessert werden, dass die einander zugewandten Oberflächen der aneinander zur Anlage gelangenden Wände der Keilkörper zumindest bereichsweise eine Oberflächenstruktur aufweisen, die sich beim Ineinanderschieben durch gegenseitige Reibung verformt. Aufgrund der eingesetzten Gusstechnologie ergeben sich relativ hohe Oberflächenrauhigkeiten. Diese fließen als wesentlicher Parameter in die Festlegung von Steigungswinkel, Wanddicke und Bemessung der Sollbruchstege ein, so dass in einem vorgegebenen Toleranzkorridor eine optimale Energieabsorption durch Verformung und Reibung bei vorgegebener Längenreduktion erfolgt. Unter Oberflächenstruktur im Sinne der Erfindung sind nicht nur die gießtechnisch bedingten Oberflächenrauhigkeiten zu verstehen, sondern auch zusätzliche Ausformungen, wie beispielsweise kleine Rippen oder Stege, die sich ineinander verhaken und allein dadurch gewährleisten, dass die ineinander geschobenen Keilkörper miteinander verklemmt sind. Insbesondere können die Oberflächen eine Geometrie aufweisen, die einen Drall, das heißt eine Drehung um die Längsachse eines Keilkörpers hervorruft. Durch die gegenseitige Verdrehung ist ein Auseinanderziehen mit geradliniger Bewegung ausgeschlossen, so dass die Keilkörper noch sicher aneinander gehalten sind.

Die Vorteile der Erfindung kommen insbesondere dann zum Tragen, wenn es sich bei dem Bauteil um in Fahrzeuglängsrichtung erstreckende Strukturbauteile bzw. Fahrwerkteile handelt. In diesem Fall erstreckt sich das Deformationselement ebenfalls in Fahrzeuglängsrichtung und kann die insbesondere von vorne anstehende Anprallkraft in einem gewissen Maße aufnehmen. Das Deformationselement verkürzt sich bei einem Crash um eine vorgegebene Länge bei gleichzeitiger Energieabsorption und vor allem unter Erhaltung der Tragfähigkeit nach dem Crash.

Es ist im Rahmen der Erfindung auch möglich, dass das Deformationsbauteil in einem geeigneten Querwinkel zur Fahrzeuglängsrichtung, insbesondere in einem Querwinkel von 45° bis 135°, insbesondere 90°, angeordnet ist. Dadurch kann das Deformationselement auch in seitencrashrelevanten Bereichen des Kraftfahrzeugs zum Einsatz kommen.

Für die Energieabsorption des Deformationselements sind neben der Materialwahl folgende Parameter von wesentlicher Bedeutung: Steigungswinkel, Wanddicke, Bemessung der Sollbruchringe und Oberflächenrauhigkeiten bzw. Oberflächengeometrie.

Um eine Selbsthemmung zu erreichen ist vorgesehen, dass die einander zugewandten Oberflächen der aneinander zur Anlage gelangenden Wände der Keilkörper aufeinander abgestimmte Steigungswinkel haben. Ist der Steigungswinkel zu groß, wäre das Deformationsbauteil nach dem Crash nicht in der Lage, als tragendes Bauteil zu dienen. Ein zu klein bemessener Steigungswinkel führt zwar zur sicheren Selbsthemmung, allerdings nimmt dadurch die Baulänge der Deformationseinheit zu. Wesentlich bei der Auswahl des Steigungswinkels ist es daher, das Optimum zu finden zwischen sicherer Selbsthemmung und minimaler Baulänge.

Wichtig für die Gewährleistung der Tragfunktion ist, dass die Keilkörper bei einem Crash nicht zerstört werden. Lediglich die Sollbruchstege sollen brechen. Ihre Belastbarkeit ist daher so gewählt, dass sie vor Erreichen einer gewählten maximalen in Umfangsrichtung gemessenen Zug- und Druckspannung im Keilkörper zerstört werden. Die Sollbruchringe sind daher so ausgelegt, dass sie mit angemessener Reserve vor Materialbruch der Keilkörper brechen. Die Belastbarkeit der Sollbruchstege ist ferner so eingestellt, dass sie entsprechend der Reihenfolge der Keilkörper brechen. Das bedeutet, dass mit steigender Krafteinwirkung die Sollbruchringe nacheinander und nicht gleichzeitig brechen. Nach dem Bruch eines Sollbruchrings schieben sich die zuvor verbundenen Keilkörper teleskopartig bis zu einer begrenzten Tiefe ineinander. Bereits hierdurch erfolgt eine einstellbare Energieabsorption. Wenn eine maximale Eindringtiefe erreicht worden ist, bricht der nachfolgende Sollbruchsteg. Dieser Vorgang setzt sich so lange fort, bis sämtliche Sollbruchstege gebrochen sind und alle Keilkörper aneinander anliegen. Die maximale Eindringtiefe kann auch einem maximalen Kraftniveau gleichgesetzt werden.

Die Anpassung des Deformationsbauteils an die Gussbauteile erfolgt über Adaptionsstücke. In einem Adaptionsstück erfolgt der Übergang der Geometrie des Metallgussbauteils auf die Geometrie des Keilstücks. Auch die Adaptionsstücke sind gießtechnisch einstückig mit den Keilkörpern und dem jeweils angeschlossenen Gussbauteil verbunden.

Aufgrund der kaskadierten Anordnung der Keilkörper und aufgrund des unterschiedlichen Lastniveaus, das jeder Keilkörper aufzunehmen bzw. zu übertragen hat, können die Wandstärken der Keilkörper unterschiedlich bemessen sein. Insbesondere ist die Wandstärke eines Keilkörpers, dessen Sollbruchsteg zuerst bricht, kleiner als die Wandstärke des nachfolgenden Keilkörpers. Die Wandstärke selbst kann über die Längserstreckung des Keilkörpers konstant sein, sie kann aber auch in Richtung ihrer trichterförmigen Erweiterung zunehmen. Dies ist zweckmäßig, da der im Durchmesser kleinere, innen liegende Wandabschnitt zusammengedrückt wird, während der im Durchmesser größere Wandabschnitt beim Ineinanderschieben von innen nach außen gedrängt wird. Die benachbarten Keilkörper sind so ausgelegt und aufeinander abgestimmt, dass beim Ineinanderschieben eine einstellbare Energieabsorption durch plastische Materialdehnung des außen liegenden Wandabschnitts und Zusammendrücken des innen liegenden Wandabschnitts, sowie durch die Reibung beim Ineinanderschieben erfolgt, ohne dass es zu Materialbruch der Wände kommt.

Die maximalen Außendurchmesser der Keilkörper, gemessen an ihrem trichterförmig erweiterten Abschnitt, können von einem ersten Keilkörper zu einem letzten Keilkörper hin zunehmen. Dadurch können auch Metallgussbauteile stark unterschiedlicher Abmessungen miteinander verbunden werden. Extreme Durchmesserschwankungen können durch entsprechende Adaptionsstücke zwischen dem Deformationsbauteil und den Metallgussbauteilen ausgeglichen werden.

Entscheidend für die Funktion des Deformationsbauteils ist das Zusammenspiel aus Kegelwinkel, Wanddicke, Belastbarkeit der Sollbruchstege und der Oberflächenstruktur. Hinsichtlich des Querschnitts der Keilkörper sind unterschiedlichste Varianten möglich. In erster Linie wird es als zweckmäßig angesehen, wenn der Keilkörper die Geometrie eines hohlen Kegelstumpfs besitzt, da bei dieser Bauform die Selbstzentrierung auf einer gemeinsamen Mittellängsachse der Keilkörper am besten gewährleistet werden kann. Hiervon abweichende Geometrien, wie beispielsweise hohle Pyramidenstümpfe oder hohle Keilstümpfe sind ebenso denkbar. Auch Keilkörper mit wenigstens einer sich in Längsrichtung erstreckenden Führungsfläche, insbesondere mehreckige Keilkörper, z.B. sternförmige Keilkörper sind möglich. In gewissen Grenzen kann hierdurch ein gegenseitiges Verdrehen der Keilkörper beim Ineinanderschieben unterbunden oder bei einer schraubenlinienartigen Geometrie gezielt gefördert werden.

Das gusstechnisch hergestellte Deformationsbauteil ist bevorzugt aus Aluminium oder einer Aluminiumlegierung hergestellt. Grundsätzlich ist es im Rahmen der Erfindung auch möglich, andere geeignete Gusswerkstoffe zu verwenden.

Um die Herstellung zu erleichtern, kann das Deformationsbauteil umfangsseitig wenigstens eine Öffnung aufweisen, so dass kein Hohlgussverfahren eingesetzt werden muss. Das Deformationsbauteil kann daher einen verschiedenartig ausgeprägten offenen Querschnitt aufweisen.

Das Deformationsbauteil kann neben dem Einsatz im Vorderwagenbereich auch für crashrelevante Zwecke bei Strukturbauteilen oder Fahrwerksteilen im Hinterwagenbereich/Heckbereich eingesetzt werden.

Die Erfindung wird nachfolgend anhand eines in schematischen Zeichnungen dargestellten Ausführungsbeispiels näher erläutert. Es zeigen:
- Figur 1: eine Draufsicht auf ein crashrelevantes Strukturbauteil in Gussbauweise;
- Figur 2: im Längsschnitt eine erste Ausführungsform eines Deformationsbauteils und
- Figur 3: in schematischer Darstellung den Ablauf des Ineinanderschiebens des Deformationsbauteils bei einem Crash.

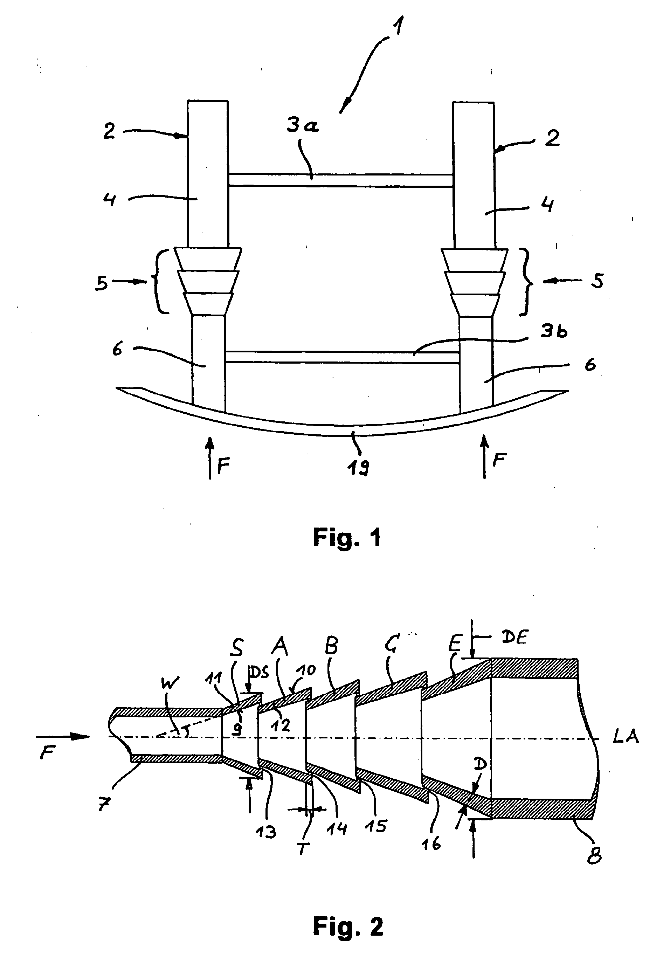

In Figur 1 ist ein schematisches Strukturbauteil 1 in stark vereinfachter Bauweise dargestellt. Das Strukturbauteil 1 umfasst zwei sich in Fahrtrichtung erstreckende Seitenteile 2, die über quer zur Fahrtrichtung verlaufende Querteile 3a, 3b miteinander verbunden sind. Jedes Seitenteil 2 ist in drei Abschnitte gegliedert: ein erstes Metallgussbauteil 4, an dem das erste Querteil 3a befestigt ist; ein sich hieran anschließendes Deformationsbauteil 5 und schließlich ein zweites Metallgussbauteil 6, an dem in diesem Ausführungsbeispiel ein Querteil 3b angeordnet ist. Die konkrete Formgebung der Metallgussbauteile 4, 6 ist in Bezug auf den Erfindungsgedanken unerheblich. Wichtig ist die Ausgestaltung des Deformationsbauteils 5. Die Deformationsbauteile 5 sind dafür vorgesehen, bei einem Crash eingeleitete Kräfte aufzufangen und in Verformungsarbeit umzuwandeln. Die eingezeichneten Pfeile F verdeutlichen die Kraftangriffsrichtung, d.h. die Kraft F wird über eine Stoßfängeranordnung 19 in die vorderen Metallgussbauteile 6 und in die Deformationsbauteile 5 eingeleitet, die wiederum an dem angrenzenden Metallgussbauteil 4 gestützt sind. Jedes Seitenteil 2 des Strukturbauteils 1 ist in diesem Ausführungsbeispiel vollständig und in einem Guss als Metallgussbauteil ausgebildet. Fügeverfahren zwischen den Metallgussbauteilen 4, 6 und dem Deformationsbauteil 5 sind nicht erforderlich.

Figur 2 zeigt in einer Schnittdarstellung den näheren Aufbau des Deformationsbauteils 5. Das Deformationsbauteil 5 besitzt in diesem Ausführungsbeispiel fünf trichterförmige Keilkörper, die mit den Buchstaben S, A, B, C und E gekennzeichnet sind. S steht für einen sogenannten Start-Keil körper, E steht für einen endseitigen Stopp-Keilkörper. Der Start-Keilkörper S ist mit einem Adaptionsstück 7 einstückig verbunden. Der Stopp-Keilkörper E ist ebenfalls mit einem Adaptionsstück 8 verbunden. Die Adaptionsstücke 7, 8 sind in diesem Ausführungsbeispiel rohrförmig konfiguriert und besitzen entsprechend den Anschlussdurchmessern des Start-Keilkörpers S bzw. des Stoppkeilkörpers E hierauf abgestimmte Durchmesser. Der Durchmesser des mit dem Start-Keilkörper S verbundenen Adaptionsstück 7 ist kleiner als der Durchmesser DE des mit dem Stopp-Keilkörper E verbundenen Adaptionsstücks 8. Sowohl die Adaptionsstücke 7, 8 als auch die dazwischen liegenden Keilkörper S, A, B und E liegen auf einer gemeinsamen Längsachse LA. Es ist zu erkennen, dass der Außendurchmesser DS, DE der Keilkörper S, A, B, C, E vom Start-Keilkörper S in Richtung zum Stopp-Keilkörper E hin zunimmt. Des Weiteren ist zu erkennen, dass alle Keilkörper S, A, B, C, E aufeinander abgestimmte Steigungswinkel W besitzen, so dass die einander zugewandten Oberflächen 9, 10 der aneinander zur Anlage gelangenden Wände 11, 12 flächig zur Anlage gebracht werden können und sich beim Ineinanderschieben selbsthemmend miteinander verklemmen. Hierzu trägt auch bei, dass die einander zugewandten Oberflächen 9, 10 der Keilkörper zumindest bereichsweise eine Oberflächenstruktur aufweisen, die sich beim Ineinanderschieben durch gegenseitige Reibung verformt, so dass die Keilkörper S, A, B, C, E sich miteinander verklemmen. Jeder Keilkörper S, A, B, C, E ist über einen Sollbruchsteg 13 - 16 mit dem jeweils nachfolgenden Keilkörper S, A, B, C, E verbunden. Die Sollbruchstege 13 - 16 sind in diesem Ausführungsbeispiel an der dem Stopp-Keilkörper E zugewandten trichterförmig erweiterten Endabschnitt des jeweiligen Keilkörper S, A, B, C angeordnet und ragen in einer Radialebene nach innen, wo sie z.B. die Wand 11 des außen liegenden Keilkörpers S mit der Wand 12 des in den vorhergehenden Keilkörpers eingreifenden Keilkörpers A verbinden. Dies gilt nicht nur für die ersten beiden Keilkörper S, A, sondern in Analogie für die Verbindung aller weiteren Keilkörper A, B, C, E. Die Eingriffstiefe T eines Keilkörpers A, B, C, E in den jeweils vorhergehenden Keilkörper S, A, B, C ist gerade so groß, dass die Keilkörper S, A, B, C, E über die dazwischen liegenden Sollbruchstege 13 - 16 verbunden sind und darüber hinaus eine gegenseite Führung der Keilkörper S, A, B, C, E gewährleistet ist, wenn ein Sollbruchsteg 13 - 16 bricht. Daher ist die Eingriffstiefe T unwesentlich größer als das doppelte der Breite eines Sollbruchstegs 13 - 16.

Aus Figur 2 ist weiterhin zu erkennen, dass die Wandstärke D eines jeden Keilkörpers S, A, B, C, E in Richtung zum jeweils nachfolgenden Keilkörper A, B, C, E hin zunimmt. Des Weiteren nimmt die mittlere Wandstärke der einzelnen Keilkörper S, A, B, C, E von dem Start-Keilkörper S bis zum Stopp-Keilkörper E zu.

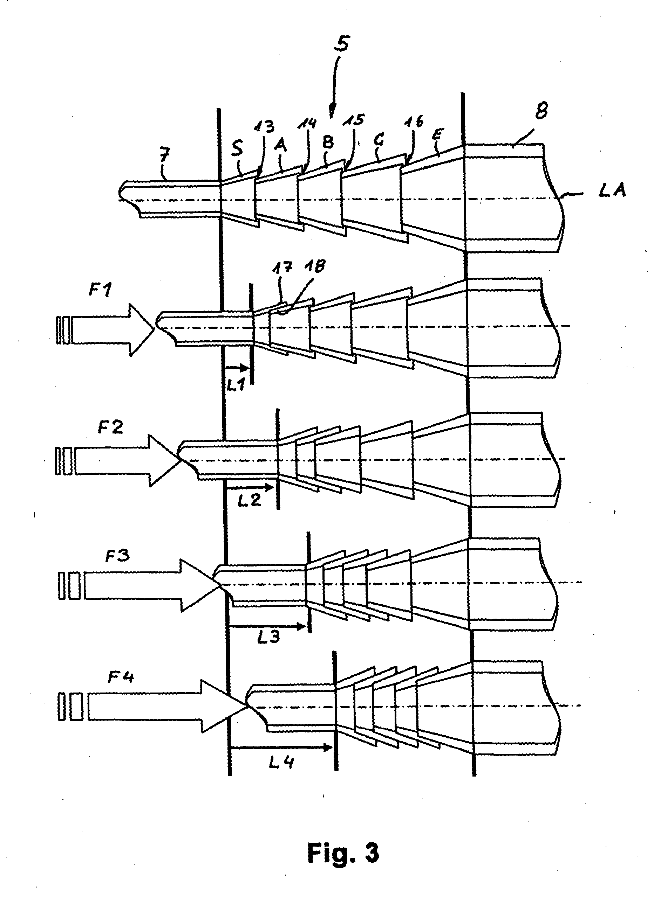

Die Funktionsweise des Deformationsbauteils wird nachfolgend anhand der Figur 3 erläutert. Figur 3 zeigt in fünf einzelnen Darstellungen die zeitliche Abfolge bei einem Crash. Die oberste Darstellung zeigt den Ausgangszustand vor Krafteinwirkung bei einem Crash. Diese Darstellung entspricht der Darstellung der Figur 2. Bei Überschreiten eines bestimmten Kraftniveaus, das durch die Länge des Pfeils F1 verdeutlicht wird, bricht der Sollbruchsteg 13 zwischen dem Start-Keilkörper S und dem sich daran anschließenden Keilkörper A. Dadurch wird der Start-Keilkörper S auf den Keilkörper A geschoben. Dies bewirkt, dass die Keilkörper S, A miteinander verklemmt werden. Gleichzeitig erfolgt ein Energieverzehr durch den Bruch des Sollbruchstegs 13 und die zwischen den Keilkörpern S, A stattfindende Reibung. Zugleich wird der außen liegende Wandabschnitt 17 des Start-Keilkörpers S gedehnt, während der innen liegende Wandabschnitt 18, der von dem Wandabschnitt 17 umschlossen wird, gestaucht wird. Die Wandabschnitte 17, 18 werden dabei so fest ineinander gepresst, dass die Keilkörper S, A einerseits sicher gegeneinander geführt sind. Andererseits erfolgt eine gewünschte Längenreduktion um das Maß L1, d.h. das Deformationsbauteil 5 verhält sich bis zu einem bestimmten Kraftniveau begrenzt nachgiebig.

Wenn die angreifende Kraft ein höheres vorbestimmtes Kraftniveau (F2) überschreitet, bricht der nächste Sollbruchsteg 14, der den Keilkörper A mit dem nachfolgenden Keilkörper B verbindet. Dies ist in der dritten Darstellung erkennbar. Das Deformationsbauteil 5 ist in diesem Fall um das Maß L2 verkürzt. Weitere Energie wurde durch den Bruch des Sollbruchstegs, gegenseitige Reibung und Dehnung der gegeneinander gepressten Keilkörper aufgenommen.

Wird die angreifende Kraft F3 noch größer (Darstellung 3) erfolgt eine weitere Verkürzung um das Maß L3 bzw. schließlich um das Maß L4 im Zusammenhang mit der Kraft F4 bei gleichzeitig zunehmender Energieaufnahme. Die unterste Darstellung zeigt die maximal mögliche Stauchung des Deformationsbauteils 5.

Mit dem erfindungsgemäßen crashrelevanten Bauteil und dem integrierten Deformationselement ist es möglich, eine bestimmte Energiemenge durch Verformung, Reibung und Zerstörung der Sollbruchstege 13 aufzunehmen, so dass sich ein gusstechnisch hergestelltes Bauteil trotz der herstellungsbedingten relativ geringen Duktilität begrenzt anprallweich verhält und zugleich einen festen Verbund der miteinander gekoppelten Gussbauteile ermöglicht.

### Bezugszeichen:

- 1 -: Strukturbauteil
- 2-: Seitenteil v. 1
- 3a-: Querteil
- 3b-: Querteil
- 4-: Metallgussbauteil
- 5-: Deformationsbauteil
- 6-: Metallgussbauteil
- 7-: Adaptionsstück
- 8-: Adaptionsstück
- 9-: Oberfläche v. S
- 10-: Oberfläche v. A
- 11 -: Wand v. S
- 12 -: Wand v. A
- 13 -: Sollbruchsteg
- 14 -: Sollbruchsteg
- 15 -: Sollbruchsteg
- 16 -: Sollbruchsteg
- 17 -: Wandabschnitt v. S
- 18 -: Wandabschnitt v. A
- 19 -: Stoßfängeranordnung

- S -: Start-Keilkörper
- A -: Keilkörper
- B -: Keilkörper
- C -: Keilkörper
- S -: Stopp-Keilkörper
- D -: Wandstärke
- F1 -: Kraft
- F2 -: Kraft
- F3 -: Kraft
- F4 -: Kraft
- L1 -: Stauchung
- L2 -: Stauchung
- L3 -: Stauchung
- L4 -: Stauchung
- LA -: Längsachse
- T -: Eingriffstiefe
- W -: Steigungswinkel

## Patentansprüche

1. Crashrelevantes Bauteil einer Fahrzeugstruktur oder eines Fahrwerks mit einem Energie absorbierenden Deformationsbauteil (5), das mehrere eines Kraftfahrzeugs in Reihe angeordnete trichterförmige Keilkörper (S, A, B, C, E) umfasst, welche über Sollbruchstege (13-16) mit jeweils benachbarten Keilkörpern (S, A, B, C, E) in ihren Durchmessern (DS, DE) derart aufeinander abgestimmt sind, dass sie bei Einreichen einer Grenzbelastung unter Zerstörung der Sollbruchstege (13-16) teleskopartig begrenzt ineinander schiebbar sind, so dass die ineinander geschobenen Keilkörper (S, A, B, C, E) selbsthemmend miteinander verklemmt sind, **dadurch gekennzeichnet, dass** das Deformationsbauteil (5) ein Metallgussbauteil ist, das in einem Gießverfahren einstückig mit einem angrenzenden ersten Metallgussbauteilen (4) und mit einem zweiten Metallgussbauteil (6) verbunden ist, welche über das Deformationsbauteil (5) miteinander verbunden sind, wobei die einander zugewandten Oberflächen (9, 10) der aneinander zur Anlage gelangenden Wände (10, 11) der Keilkörper (S, A, B, C, E) zumindest bereichsweise eine Oberflächenstruktur aufweisen, die sich beim Ineinanderschieben durch gegenseitige Reibung verformt.

2. Bauteil nach Anspruch 1, **dadurch gekennzeichnet, dass** das Deformationsbauteil (5) in Fahrzeuglängsrichtung angeordnet ist.

3. Bauteil nach Anspruch 1, **dadurch gekennzeichnet, dass** das Deformationsbauteil (5) in einem Querwinkel zur Fahrzeuglängsrichtung angeordnet ist.

4. Bauteil nach Anspruch 3, **dadurch gekennzeichnet, dass** der Querwinkel zwischen 45° und 135° liegt und insbesondere 90° beträgt.

5. Bauteil nach einem der Ansprüche 1 bis 4, **dadurch gekennzeichnet, dass** die einander zugewandten Oberflächen (9, 10) der aneinander zur Anlage gelangenden Wände (10, 11) aufeinander abgestimmte Steigungswinkel (W) haben, die so gewählt sind, dass ineinander geschobene Keilkörper (S, A, B, C, E) selbsthemmend miteinander verklemmt sind.

6. Bauteil nach Anspruch 1, **dadurch gekennzeichnet, dass** die Oberflächenstruktur so gewählt ist, dass ineinander geschobene Keilkörper (S, A, B, C, E) miteinander verklemmt sind.

7. Bauteil nach einem der Ansprüche 1 bis 6, **dadurch gekennzeichnet, dass** die Belastbarkeit der Sollbruchstege (13-16) so gewählt ist, dass sie vor Erreichen einer gewählten maximalen in Umfangsrichtung gemessen Zug- oder Druckspannung im Keilkörper (S, A, B, C, E) brechen.

8. Bauteil nach einem der Ansprüche 1 bis 7, **dadurch gekennzeichnet, dass** die Belastbarkeit der Sollbruchstege (13-16) so gewählt ist, dass sie entsprechend der Reihenfolge der Keilkörper (S, A, B, C, E) brechen.

9. Bauteil nach einem der Ansprüche 1 bis 8, **dadurch gekennzeichnet, dass** die an die Metallgussbauteile (4, 6) angeschlossenen Keilkörper (S, E) über Adaptionsstücke (7, 8) mit den Gussbauteilen (4, 6) verbunden sind.

10. Bauteil nach einem der Ansprüche 1 bis 9, **dadurch gekennzeichnet, dass** die Wandstärke eines ersten Keilkörpers (S, A, B, C) kleiner ist, als die Wandstärke des nachfolgenden Keilkörpers (A, B, C, E).

11. Bauteil nach einem der Ansprüche 1 bis 10, **dadurch gekennzeichnet, dass** die Wandstärke (D) der Keilkörper (S, A, B, C, E) in Richtung ihrer trichterförmigen Erweiterung zunimmt.

12. Bauteil nach einem der Ansprüche 1 bis 11, **dadurch gekennzeichnet, dass** die maximalen Außendurchmesser (DS, DE) der Keilkörper (S, A, B, C, E) von einem ersten Keilkörper (S) zu einem letzten Keilkörper (E) zunehmen.

13. Bauteil nach einem der Ansprüche 1 bis 12, **dadurch gekennzeichnet, dass** die Keilkörper (S, A, B, C, E) die Geometrie eines hohlen Kegelstumpfes besitzen.

14. Bauteil nach einem der Ansprüche 1 bis 12, **dadurch gekennzeichnet, dass** die Keilkörper die Geometrie eines hohlen Pyramidenstumpfes besitzen.

15. Bauteil nach einem der Ansprüche 1 bis 12, **dadurch gekennzeichnet, dass** die Keilkörper die Geometrie eines hohlen Keilstumpfes besitzen.

16. Bauteil nach einem der Ansprüche 1 bis 15, **dadurch gekennzeichnet, dass** die Metallgussbauteile (4, 6) und das Deformationsbauteil (5) aus einer Aluminiumlegierung hergestellt sind.

17. Bauteil nach einem der Ansprüche 1 bis 16, **dadurch gekennzeichnet, dass** das Deformationsbauteil (5) umfangsseitig wenigstens eine Öffnung aufweist.

## Claims

1. Crash-related component of a vehicle structure or of a chassis of a motor vehicle, with an energy-absorbing deformation component (5) which comprises a plurality of funnel-shaped wedge bodies (S, A, B, C, E) which are arranged in a row and are coordinated with one another in their diameters (DS, DE) via predetermined breaking webs (13-16) with respectively adjacent wedge bodies (S, A, B, C, E) in such a manner that, when a limit load is reached, they can be pushed telescopically one inside another to a limited extent, with the predetermined breaking webs (13, 16) being destroyed, such that the wedge bodies (S, A, B, C, E) which are pushed one inside another are clamped to one another in a self-locking manner, **characterized in that** the deformation component (5) is a metal cast component which, in a casting process, is connected integrally with an adjacent first metal cast component (4) and with a second metal cast component (6), which components are connected to each other via the deformation component (5), with the mutually facing surfaces (9, 10) of those walls (10, 11) of the wedge bodies (S, A, B, C, E) which come into contact with each other having, at least in some regions, a surface structure which is deformed by mutual friction when said wedge bodies are pushed one inside another.

2. Component according to Claim 1, **characterized in that** the deformation component (5) is arranged in the longitudinal direction of the vehicle.

3. Component according to Claim 1, **characterized in that** the deformation component (5) is arranged at a transverse angle with respect to the longitudinal direction of the vehicle.

4. Component according to Claim 3, **characterized in that** the transverse angle is between 45° and 135° and is in particular 90°.

5. Component according to one of Claims 1 to 4, **characterized in that** the mutually facing surfaces (9, 10) of the walls (10, 11) which come into contact with each other have mutually coordinated pitch angles (W) which are selected in such a manner that wedge bodies (S, A, B, C, E) which are pushed one inside another are clamped to one another in a self-locking manner.

6. Component according to Claim 1, **characterized in that** the surface structure is selected in such a manner that wedge bodies (S, A, B, C, E) which are pushed one inside another are clamped to one another.

7. Component according to one of Claims 1 to 6, **characterized in that** the load-bearing capacity of the predetermined breaking webs (13-16) is selected in such a manner that they break before a selected, maximum tensile or compressive stress, as measured in the circumferential direction, in the wedge body (S, A, B, C, E) is reached.

8. Component according to one of Claims 1 to 7, **characterized in that** the load-bearing capacity of the predetermined breaking webs (13-16) is selected in such a manner that they break in a manner corresponding to the sequence of the wedge bodies (S, A, B, C, E).

9. Component according to one of Claims 1 to 8, **characterized in that** the wedge bodies (S, E) which are connected to the metal cast components (4, 6) are connected to the cast components (4, 6) via adaptation elements (7, 8).

10. Component according to one of Claims 1 to 9, **characterized in that** the wall thickness of a first wedge body (S, A, B, C) is smaller than the wall thickness of the following wedge body (A, B, C, E).

11. Component according to one of Claims 1 to 10, **characterized in that** the wall thickness (D) of the wedge bodies (S, A, B, C, E) increases in the direction of their funnel-shaped widened portion.

12. Component according to one of Claims 1 to 11, **characterized in that** the maximum outside diameters (DS, DE) of the wedge bodies (S, A, B, C, E) increase from a first wedge body (S) to a last wedge body (E).

13. Component according to one of Claims 1 to 12, **characterized in that** the wedge bodies (S, A, B, C, E) have the geometry of a hollow truncated cone.

14. Component according to one of Claims 1 to 12, **characterized in that** the wedge bodies have the geometry of a hollow truncated pyramid.

15. Component according to one of Claims 1 to 12, **characterized in that** the wedge bodies have the geometry of a hollow truncated wedge.

16. Component according to one of Claims 1 to 15, **characterized in that** the metal cast components (4, 6) and the deformation component (5) are produced from an aluminium alloy.

17. Component according to one of Claims 1 to 16, **characterized in that** the deformation component (5) has at least one opening on the circumference.

## Revendications

1. Composant actif en cas de collision dans la structure ou dans le train de roulement d'un véhicule automobile, comprenant un composant à déformation (5) absorbant l'énergie, qui comprend plusieurs corps en coin (S, A, B, C, E) à forme d'entonnoir agencés en série, qui sont liés les uns aux autres via des barrettes de rupture de consigne (13-16) et accordés vis-à-vis des corps coniques respectivement voisins (S, A, B, C, E) quant à leur diamètre (DS, DE) de telle façon que, lorsqu'une charge limite est atteinte, ils sont susceptibles de s'enfiler les uns dans les autres de manière télescopique et de façon limitée avec destruction des barrettes de rupture de consigne (13-16) de telle façon que les corps en coin (S, A, B, C, E) enfilés les uns dans les autres sont coincés les uns avec les autres en autoblocage, **caractérisé en ce que** le composant à déformation (5) est un composant en fonte qui, lors d'un processus de coulée, est relié d'une seule pièce avec un premier composant en fonte métallique adjacent (4) et avec un second composant en fonte métallique (6), ces deux composants étant reliés l'un à l'autre via le composant à déformation (5), et les surfaces en vis-à-vis (9, 10) des parois (10, 11), qui viennent en contact mutuel, des corps en coin (S, A, B, C, E) présentent au moins localement une structure de surface qui se déforme par friction réciproque lors du mouvement d'enfilement.

2. Composant selon la revendication 1, **caractérisé en ce que** le composant à déformation (5) est agencé dans la direction longitudinale du véhicule.

3. Composant selon la revendication 1, **caractérisé en ce que** le composant à déformation (5) est agencé sous un angle transversal vis-à-vis de la direction longitudinale du véhicule.

4. Composant selon la revendication 3, **caractérisé en ce que** l'angle transversal est compris entre 45° et 135°, et s'élève en particulier à 90°.

5. Composant selon l'une des revendications 1 à 4, **caractérisé en ce que** les surfaces (9, 10) en vis-à-vis des parois (10, 11) qui viennent en contact mutuel possèdent des angles d'inclinaison (W) accordés les uns aux autres, qui sont ainsi choisis que les corps en coin (S, A, B, C, E) enfilés les uns dans les autres sont coincés les uns avec les autres en autoblocage.

6. Composant selon la revendication 1, **caractérisé en ce que** la structure de surface est ainsi choisie que les corps en coin (S, A, B, C, E) enfilés les uns dans les autres sont coincés les uns avec les autres.

7. Composant selon l'une des revendications 1 à 6, **caractérisé en ce que** la charge supportable par les barrettes de rupture de consigne (13-16) est ainsi choisie qu'elles se rompent avant d'atteindre dans le corps en coin (S, A, B, C, E) une contrainte de traction ou de compression maximale prédéterminée, mesurée en sens périphérique.

8. Composant selon l'une des revendications 1 à 7, **caractérisé en ce que** la charge supportable par les barrettes de rupture de consigne (13, 16) est ainsi choisie qu'elles se rompent en correspondance de la succession des corps en coin (S, A, B, C, E).

9. Composant selon l'une des revendications 1 à 8, **caractérisé en ce que** les corps en coin (S, E) reliés aux composants en fonte métallique (4, 6) sont reliés aux composants en fonte (4, 6) via des pièces d'adaptation (7, 8).

10. Composant selon l'une des revendications 1 à 9, **caractérisé en ce que** l'épaisseur de paroi d'un premier corps en coin (S, A, B, C) est inférieure à l'épaisseur de paroi du corps en coin (A, B, C, E) successif.

11. Composant selon l'une des revendications 1 à 10, **caractérisé en ce que** l'épaisseur de paroi (D) des corps en coin (S, A, B, C, E) augmente en direction de leur évasement en forme d'entonnoir.

12. Composant selon l'une des revendications 1 à 11, **caractérisé en ce que** le diamètre extérieur maximum (DS, DE) des corps en coin (S, A, B, C, E) augmente depuis un premier corps en coin (S) jusqu'à un dernier corps en coin (E).

13. Composant selon l'une des revendications 1 à 12, **caractérisé en ce que** les corps en coin (S, A, B, C, E) possèdent la géométrie d'un tronc de cône creux.

14. Composant selon l'une des revendications 1 à 12, **caractérisé en ce que** les corps en coin possèdent la géométrie d'un tronc de pyramide creux.

15. Composant selon l'une des revendications 1 à 12, **caractérisé en ce que** les corps en coin possèdent la géométrie d'un tronc de coin creux.

16. Composant selon l'une des revendications 1 à 15, **caractérisé en ce que** les composants en fonte métallique (4, 6) et le composant à déformation (5) sont réalisés en alliage d'aluminium.

17. Composant selon l'une des revendications 1 à 16, **caractérisé en ce que** le composant à déformation (5) présente au moins une ouverture à sa périphérie.
